# EUROPÄISCHE PATENTANMELDUNG

(11) **EP 0 779 191 A1**
(43) Veröffentlichungstag der Anmeldung: **18.06.1997**
(21) Anmeldenummer: 96117315.0
(22) Anmeldetag: 29.10.1996
(51) Int. Cl.: B60S 1/34

(54) **Wischanlage von Scheiben von Kraftfahrzeugen**

(30) Priorität: 15.12.1995 DE 19546862
(71) Anmelder: ROBERT BOSCH GMBH, 70442 Stuttgart (DE)
(72) Erfinder: Heinrich, Laurent, 67400 Illkirch-Grafenstad (FR)

(57) **Zusammenfassung**

Es wir eine Wischanlage vorgeschlagen die zum Reinigen von Scheiben von Kraftfahrzeugen dient. Die Wischanlage hat einen einzigen Wischerarm (18), der an seinem einen Ende pendelbar gelagert angetrieben ist und an dessen anderen freien Ende ein an der zu wischenden Oberfläche der Scheibe angelegtes, zwischen zwei Umkehrlagen quer zu seiner Längserstreckung hin- und her bewegbares Wischblatt (16) angelenkt ist. Die Wischanlage hat einen sich etwa parallel zum angetriebenen Wischerarm erstreckenden Steuerarm (50), dessen eines Ende pendelbar gelagert ist und dessen anderes Ende gelenkig mit dem Wischblatt (16) verbunden ist, so daß er während des Wischbetriebs eine der Pendelbewegung des Wischerarms entsprechende Pendelbewegung ausfuhrt. Um auf besonders einfache und betriebssichere Weise mit dem Wischblatt ein wenigstens annähernd rechteckförmiges Wischfeld zu überstreichen, bildet der das Pendellager aufweisende Endabschnitt des Wischerarms ein Getriebeglied (36) eines Mehrgelenkgetriebes (38), an dem in Längsrichtung des Wischerarms mit Abstand voneinander zwei, an ortsfesten Lagerstellen pendelbar gelagerte Getriebeglieder des Mehrgelenks angelenkt sind und daß eines der weiteren Getriebeglieder gleichzeitig ein Getriebeglied eines weiteren Mehrgelenkgetriebes (40) bildet an dem der Steuerarm (50) angelenkt ist.

## Beschreibung

### Stand der Technik

Wenn beispielsweise die Windschutzscheibe eines Kraftfahrzeuges mit einer nur einen einzigen Wischerarm aufweisenden Wischvorrichtung gewischt werden soll ist es bekannt (DE-36 10 879 A1), der Pendelbewegung des Wischblatts eine Hubbewegung zu überlagern, damit auch die für den Fahrer des Kraftfahrzeuges wichtigen Eckbereiche der Scheibe hinreichend gesäubert werden können. Die zur Erzeugung der Hubbewegung erforderliche Getriebeanordnung - die ein Zahnradgetriebe und ein Schubkurbelgetriebe umfaßt - arbeitet zwar zufriedenstellend, ist aber sehr teuer und neigt zur Geräuschbildung, zu deren Vermeidung besondere Maßnahmen vorgesehen werden müssen.

Eine andere bekannte Wischanlage (WO 88/04247) weist zur Erzeugung eines nahezu rechteckigen, auch die Scheibeneckbereiche erfassenden Wischfeldes auf der Scheibe eine Anordnung auf, welche zum Erreichen der angestrebten Wischfeldform dafür sorgt, daß zwei am Wischblatt angelenkte Wischerarme während des Wischbetriebs - je nach Wischblattposition - stetig verkürzt oder verlängert werden. Die beiden Wischerarme sollen für eine zur Verschieberichtung senkrechte Stellung des Wischblatts sorgen, damit das Wischfeld bis nahe an den seitlichen Scheibenrand herangeführt werden kann. Zur Veränderung der Wischerarmlängen sind sehr aufwendige Maßnahmen vorgesehen, die für jeden Wischerarm ein komplettes, zusätzliches Kurbelgetriebe beziehungsweise eine teuere hydraulisch betätigbare Teleskopmechanik erfordern.

### Vorteile der Erfindung

Bei der erfindungsgemäßen Wischanlage dagegen wird durch die Anordnung von zwei miteinander wirkverbundenen Mehrgelenkgetrieben - die vorzugsweise als Viergelenkgetriebe ausgelegt sind - der Pendelbewegung des Wischblatts eine Hubbewegung überlagert, weil durch das eine Viergelenkgetriebe der Pendelachse eine Verschiebung entlang einer vorbestimmten, gekrümmten Bahn aufgezwungen wird. Weiter bewirkt das andere Viergelenkgetriebe eine stetige, den Erfordernissen angepaßte Schwenkung des Wischblatts gegenüber dem Wischerarm, so daß es in seinen Pendelumkehrlagen zumindest annähernd parallel zum Scheibenrand anlegbar ist und somit nahe an diesen herangeführt werden kann. Die erfindungsgemäße Ausgestaltung der Wischanlage ermöglicht auf einfache Weise eine Anpassung des Wischfeldes an die vorgegebene Scheibenform, weil dazu lediglich die wirksame Länge von bestimmten Gliedern der beiden Viergelenkgetriebe verändert werden muß. Weiter ist die erfindungsgemäße Wischanlage besonders betriebssicher.

In Weiterbildung des Erfindungsgedankens differieren die an dem Endabschnitt des Wischerarms angelenkten Getriebeglieder hinsichtlich ihrer wirksamen Längen. Je nach Größe der Differenz verändert sich die Form des vom Wischblatt überstrichenen Wischfeldes, so daß dieses auf einfacheweise den Erfordernissen anzupassen ist.

Eine besonders einfach aufgebautes Viergelenkgetriebe ergibt sich, wenn das kürzere Getriebeglied am Ende des Wischerarms angelenkt ist und das längere Getriebeglied mit Abstand von diesem Gelenk näher am Wischblatt mit dem Wischerarm gelenkig verbunden ist.

Wenn weiter das längere Getriebeglied des ersten Viergelenkgetriebes gleichzeitig ein Getriebeglied des zweiten Viergelenkgetriebes bildet und an dem freien Ende dieses Getriebeglieds ein Ende eines zum zweiten Viergelenkgetriebe gehörenden Distanzarms angelenkt ist, wobei die Gelenkachse der Gelenke zwischen dem längeren Getriebeglied und dem Wischerarm sowie dem längeren Getriebeglied und dem Distanzarm miteinander fluchten und weiter das andere Ende des Distanzarms gelenkig mit dem Steuerarm verbunden ist, wird auf einfache, kostengünstige Weise ein vorteilhafter Anschluß des Steuerarms an das zweite Viergelenkgetriebe erreicht.

Eine weitere Vereinfachung der Viergelenkmechanik ergibt sich dadurch, daß an der Gelenkstelle zwischen dem Steuerarm und dem Mittelglied das freie Ende eines weiteren, zum zweiten Viergelenkgetriebe gehörenden Getriebeglieds angelenkt ist, dessen anderes Ende ortsfest gelagert ist.

Ein zur Mittelposition des Wischblatts zwischen seinen beiden Umkehrstellungen symmetrisches Wischfeld wird erreicht, wenn die wirksame Länge des weiteren Getriebsglieds des zweiten Viergelenkgetriebes gleich ist der wirksamen Länge des dem ersten Viergelenkgetriebe und dem zweiten Viergelenkgetriebe gemeinsam zugeordneten Getriebeglieds.

Montagevorteile ergeben sich bei der erfindungsgemäßen Wischanlage, wenn die ortsfesten Lagerungen der Getriebeglieder des ersten Viergelenkgetriebes und die ortsfesten Lagerungen der Getriebeglieder des zweiten Viergelenkgetriebes an einem gemeinsamen, ortsfesten, an der Karosserie befestigbaren Bauelement angeordnet sind.

Zweckmäßig ist das andere, vom Distanzarm abgewandte Ende des Steuerarms gelenkig mit dem Wischblatt verbunden, wobei das Gelenk zwischen Steuerarm und Wischblatt an dem freien Ende eines fest mit dem Wischblatt verbundenen, quer zur Wischblatt-Längserstreckung ausgerichteten Hebels angeordnet. Durch Abstimmung der wirksamen Längen des Hebels und des Mittelglieds aufeinander wird eine definierte Schrägstellung des Wischblatts gegenüber dessen Senkrechtstellung in der Mitte des Wischfeldes erreicht. Dadurch ist eine einwandfreie Anpassung der Wischblatt-Umkehrlage an den Verlauf des dieser benachbarten Scheibenrandes möglich.

Diese Anpassung wird auch dadurch ermöglicht, daß das Wischblatt mit dem freien Ende des Wischerarms gelenkig verbunden ist und weiter die Achsen der Gelenke zwischen Wischerarm und Wischblatt beziehungsweise zwischen Steuerarm, Getriebeglied und Distanzarm beziehungsweise zwischen Distanzarm, Getriebeglied und Wischerarm auf der Scheibenoberfläche stehend und zu einander parallel angeordnet sind.

Ein zuverlässiger Betrieb der Wischanlage wird sichergestellt, wenn das zu dem ersten und dem zweiten Viergelenkgetriebe gehörende, gemeinsame Getriebeglied pendelnd angetrieben ist.

Kostenvorteile ergeben sich bei einer kompakten Bauweise der Wischanlage, wenn als Antriebsaggregat für die Wischanlage ein elektrischer Antriebsmotor dient, und das Antriebsaggregat eine pendelnd angetriebene Abtriebswelle aufweist.

### Zeichnung

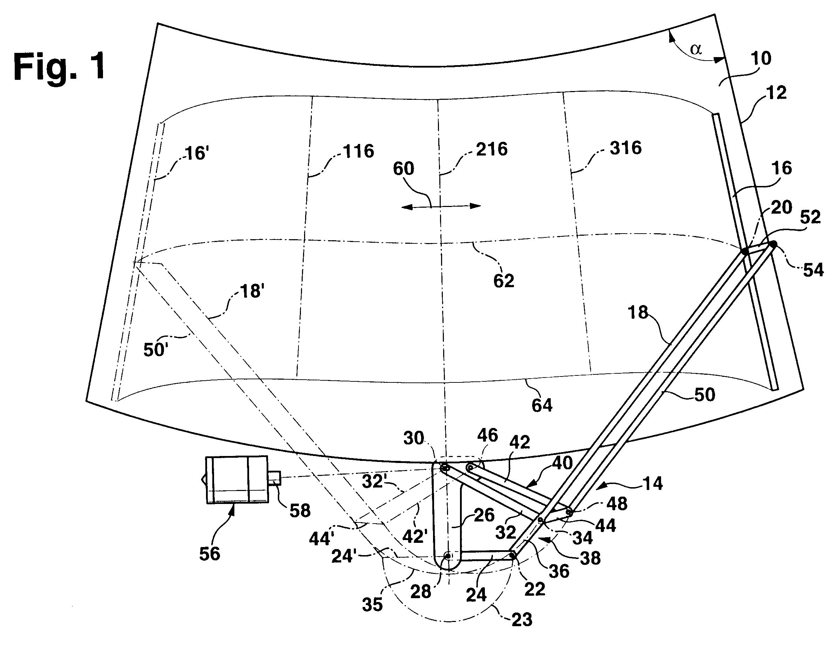

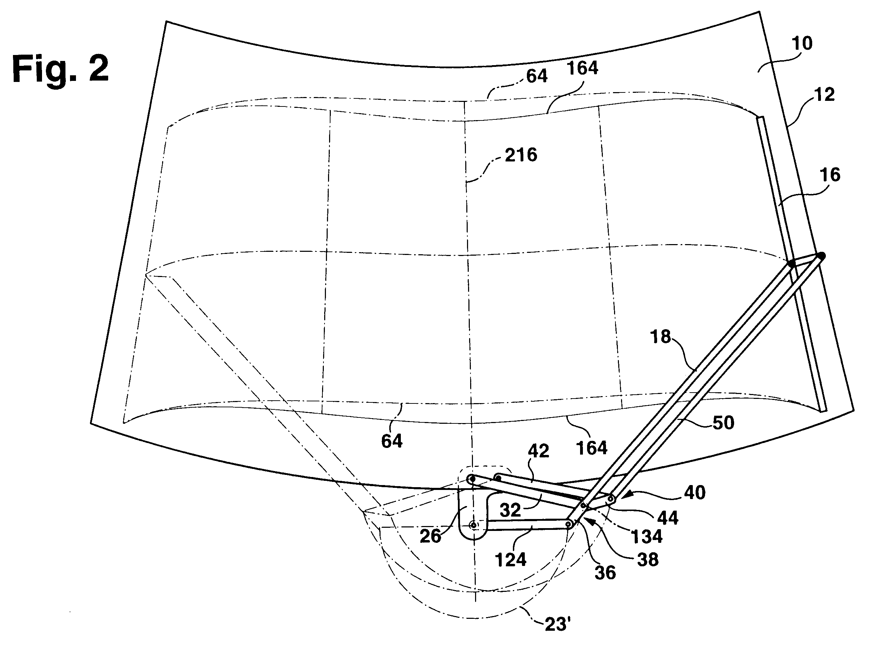

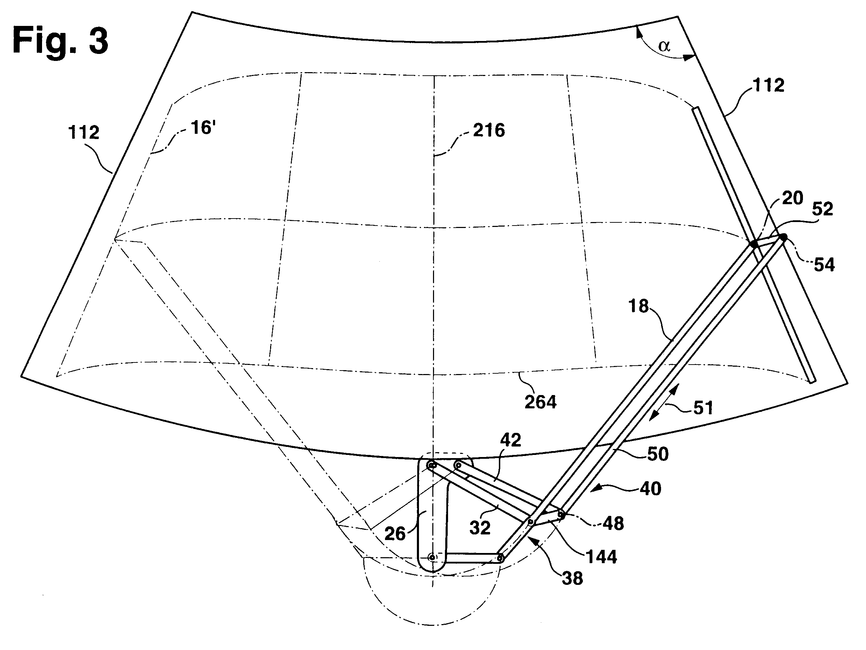

Ausführungsbeispiele der Erfindung sind in der Zeichnung dargestellt und in der nachfolgenden Beschreibung näher erläutert. Es zeigen Figur 1 eine Prinzipdarstellung einer Windschutzscheibe eines Kraftfahrzeuges von außen gesehen, der eine erste erfindungsgemäße Wischanlage mit nur einem einzigen Wischerarm zugeordnet ist, Figur 2 eine der Windschutzscheibe gemäß Figur 1 zugeordnete anders ausgebildete Wischanlage, die ein von der Wischanlage gemäß Figur 1 abweichendes Wischfeld bearbeitet und Figur 3 eine weitere Wischanlage, welche eine in ihrer Gestalt von der Windschutzscheibe gemäß Figur 1 abweichende Windschutzscheibe bearbeitet.

### Beschreibung der Ausführungsbeispiele

Figur 1 zeigt eine Prinzipdarstellung einer Windschutzscheibe 10 eines nicht näher dargestellten Kraftfahrzeuges, deren Rand mit 12 bezeichnet ist. Der Windschutzscheibe 10 ist eine erfindungsgemäße Scheibenwischanlage 14 zugeordnet, die nur ein einziges Wischblatt 16 aufweist. Figur 1 zeigt die Windschutzscheibe 10 in Frontansicht, das heißt, von außen mit Blickrichtung von vorn auf das Kraftfahrzeug. Das Wischblatt 16 ist also in seiner einen Umkehrstellung dargestellt die sich auf der Seite des Fahrers des Kraftfahrzeuges befindet. Das langgestreckte Wischblatt 16 liegt also in seiner Umkehrstellung nahe am Scheibenrand 12 und etwa parallel zu diesem. Es ist in seinem Mittelabschnitt gelenkig mit einem Ende eines angetriebenen Wischerarms 18 verbunden. Das Gelenk ist in Figur 1 mit der Bezugszahl 20 versehen. Das andere Ende des Wischerarms 18 ist über ein Gelenk 22 mit einem Ende eines Arms 24 gelenkig verbunden, dessen anderes Ende in einem karosseriefesten Bauelement 26 pendelbar gelagert ist. Diese Lagerstelle ist in Figur 1 mit dem Bezugszeichen 28 versehen worden. Das Bauelement 26 weist eine weitere Lagerstelle 30 für das eine Ende eines Schwinghebels 32 auf, dessen anderes, von der Lagerstelle 30 abgewandtes Ende gelenkig mit dem Wischerarm 18 verbunden ist. Dieses Gelenk ist in Figur 1 mit der Bezugszahl 34 versehen. Das Gelenk 34 befindet sich mit Abstand von dem Gelenk 22 zwischen den beiden Gelenken 20 und 22 des Wischerarms 18. Die wirksame Länge des Schwinghebels 32, welche durch den Abstand zwischen der Lagerstelle 30 und dem Gelenk 34 gegeben ist ist größer als wirksame Länge des Arms 24, die sich aus dem Abstand zwischen der Lagerstelle 28 und dem Gelenk 22 am Wischerarm 18 ergibt. Der Arm 24 bildet zusammen mit dem Schwinghebel 32 und dem zwischen dem Gelenk 22 und dem Gelenk 34 befindlichen Endabschnitt 36 des Wischerarms 18 ein Mehrgelenkgetriebe, hier ein sogenanntes Viergelenkgetriebe 38. Die Getriebeglieder des Viergelenkgetriebes 38 werden dabei durch den Arm 24, Schwinghebel 32 und den Endabschnitt 36 gebildet. Der Schwinghebel 32 ist aber gleichzeitig auch Glied eines zweiten Mehrgelenkgetriebes, das hier ebenfalls als Viergelenkgetriebe 40 ausgelegt ist, zu dem ein Lenker 42 und ein Distanzarm 44 als weitere Getriebeglieder gehören. Das eine Ende des Lenkers 42 ist in einer Lagerstelle 46 des karosseriefesten Bauelements 26 pendelbar gelagert. Das andere, freie Ende des Lenkers 42 führt zu einem Gelenk 48, durch das der Lenker 42 mit einem Steuerarm 50 gelenkig verbunden ist. Der Distanzarm 44 ist gelenkig mit dem Wischerarm 18 und dem Steuerarm 50 gelenkig verbunden. Die Verbindungen erfolgen in den Gelenken 34 und 48. Somit ist ersichtlich, daß zu dem zweiten Viergelenkgetriebe 40 neben dem Getriebeglied 32 auch zwei weitere Getriebeglieder gehören, welche durch den Lenker 42 und den Distanzarm 44 gebildet sind. Die wirksamen Längen dieser Getriebeglieder wird beim Getriebeglied 42 durch den Abstand zwischen der Lagerstelle 46 und dem Gelenk 48 und beim Getriebeglied 44 durch den Abstand zwischen dem Gelenk 34 und dem Gelenk 48 gebildet. Die wirksamen Längen der Getriebeglieder 32 (Schwinghebel) und 42 (Lenker) sind beim Ausführungsbeispiel gleich groß, so daß - bezogen auf die Mittelposition 216 des Wischblatts 16 - sich ein symmetrisches Wischfeld ergibt. Das andere, von dem Gelenk 48 abgewandte Ende des Steuerarms 50 ist gelenkig mit einem Hebel 52 verbunden der fest am Wischblatt 16 angeordnet und quer zur Wischblatt-Längserstreckung ausgerichtet ist. Die Gelenkverbindung zwischen dem Hebel 52 und dem Steuerarm 50 erfolgt in einem Gelenk 54. Um einen störungsfreien Betrieb der Wischanlage zu erreichen sind die Gelenkachsen der Gelenke zwischen dem Getriebeglied 32 und dem Wischerarm 18 sowie dem Getriebeglied 32 und dem Distanzarm 44 miteinander fluchtend angeordnet. Dazu gehört auch, daß die Achsen der Gelenke 20 bzw. 54 bzw. 48 bzw. 34 zwischen dem Wischerarm 18 und dem Wischblatt 16, beziehungsweise dem Steuerarm 50 und dem Wischblatt 16, 52, beziehungsweise dem Steuerarm 50, Lenker 42 und dem Distanzarm 44, beziehungsweise dem Distanzarm 44, Schwinghebel 32 und dem Wischerarm 18 auf der Oberfläche der Scheibe 10 stehend und zueinander parallel angeordnet sind. Dies gilt auch für das Gelenk 22 zwischen Wischerarm 18, 36 und dem Arm 24 sowie für die Achsen der karosseriefesten Lagerungen 28, 30, 46.

Die Wischanlage wird durch ein elektromotorisch betätigtes Antriebsaggregat 56 angetrieben das eine pendelnde Abtriebswelle 58 aufweist, welche an der Lagerstelle 30 mit dem Schwinghebel 32 wirkverbunden ist so daß die Arbeitsbewegung des Wischblatts 16 vom Schwinghebel 32 ausgeht.

Wenn das Antriebsaggregat 56 aktiviert ist treibt dessen Abtriebswelle 58 den Schwinghebel 32 pendelnd an. Die eine der beiden Pendel-Umkehrlagen ist in Figur 1 ausgezogen dargestellt, während die andere Pendel-Umkehrlage des Wischerarms 18 und des Steuerarms 50 strichpunktiert dargestellt und mit dem Bezugszeichen 18' und 50' markiert sind. Wenn der Schwinghebel 32 aus seiner gezeigten Position herausbewegt wird, folgt das Gelenk 34 einer strichpunktiert dargestellten Bahn 35 deren Verlauf durch die wirksame Länge des Schwinghebels 32 festgelegt ist. Die Bahn 35 endet in der anderen Umkehrlage 32' des Schwinghebels 32. Über den Endabschnitt 36 des Wischerarms 18 beziehungsweise über das Gelenk 22 wird gleichzeitig auch der Arm 24 um seine Lagerstelle 28 geschwenkt. Dabei folgt das Gelenk 22 einer Bahn 23, deren Verlauf durch die wirksame Länge des Arms 24 festgelegt ist. Durch die unterschiedlichen wirksamen Längen des Schwinghebels 32 und des Arms 24 wird dem Wischerarm 18 eine der Verschiebebewegung auf der Windschutzscheibe eine Hubbewegung überlagert, welche durch den Verlauf der Bahn 23 bestimmt ist. Während der Verschiebebewegung des Wischblatts 16, die in Figur 1 durch den Doppelpfeil 60 dargestellt ist, schwenkt der Wischerarm 18 gleichzeitig um das Gelenk 34 zwischen Wischerarm und Schwinghebel 32 und das Gelenk 22 zwischen Wischerarm 18 und Arm 24. Das Gelenk 20 zwischen Wischerarm 18 und Wischblatt 16 folgt somit einer in Figur 1 strichpunktiert dargestellten Kurve 62 bis sich das Wischblatt in seiner anderen Umkehrstellung befindet in der es mit 16' bezeichnet ist. Dabei befinden sich alle Getriebeglieder der beiden Viergelenkgetriebe 38 und 40 in ihren mit 34', 32', 42' und 24' bezeichneten Pendel-Umkehrpositionen.

Damit das Wischblatt 16 während der Verschiebebewegung (Doppelpfeil 60) auf der Oberfläche der zu wischenden Scheibe 10 stets im wesentlichen quer zur Verschieberichtung gehalten ist, dafür sorgt der Steuerarm 50 in Verbindung mit den wirksamen Längen des Distanzarms 44 und des Hebels 52. In Figur 1 sind drei Zwischenpositionen des Wischblatts 16 angegeben und mit 116, 216 und 316 bezeichnet. Die Figur 1 macht also deutlich, daß das Wischblatt 16 im Verlauf seiner Verschiebebewegung eine Schwenkbewegung um das Gelenk 20 ausführt welche in der Position 216 zu einer Senkrechtstellung des Wischblatts führt deren Verlängerung durch die beiden Lagerstellen 28 und 30 des Arms 24 und des Schwinghebels 32 führt. Die Schwenkbewegung des Wischblatts 16 um das Gelenk 20 wird durch die Ausgestaltung des zweiten Gelenkvierecks 40 erzwungen und ermöglicht eine saubere Anpassung des Verlaufs des Wischblatts 16 in seinen beiden Umkehrlagen an dem Verlauf des dem Wischblatt benachbarten Scheibenrandes 12.

Die Wischanlage gemäß Figur 2 stimmt mit Ausnahme der wirksamen Länge des Arms 24 gemäß Figur 1 völlig mit der in Figur 1 gezeigten Wischanlage überein. Deshalb sind die dort verwendeten Bezugszahlen auch in die Ausführungsform gemäß Figur 2 übernommen worden. Abweichend von der Wischanlage gemäß Figur 1 hat der Arm 124 eine größere wirksame Länge als der Arm 24 bei der Wischanlage gemäß Figur 1. Dies erfordert auch eine Anpassung des Gelenks 134 am Wischerarm 18. Dadurch wird die der Wischbewegung 60 überlagerte Hubbewegung des Wischblatts 16 vergrößert, weil das Gelenk 22 einer Bahn 23' folgen muß, durch welche das Wischblatt 16 in seiner Mittelposition 216 um die Differenz der wirksamen Längen der Arme 24 (Figur 1) beziehungsweise 124 (Figur 2) nach unten gezogen wird. Da in Figur 2 mit strichpunktierten Linien die Form des Wischfeldes 64 der Wischanlage gemäß Figur 1 eingezeichnet ist, das Wischfeld 164 der Wischanlage gemäß Figur 2 aber ausgezogen dargestellt worden ist, ist die Wirkung dieser Verlängerung deutlich zu erkennen.

Bei der Wischanlage gemäß Figur 3 soll demonstriert werden, daß die gewünschte beziehungsweise erforderliche Schrägstellung des Wischblatts durch eine einzige, einfache Maßnahme erreicht werden kann. Zunächst sei aber auf diesem Fall darauf hingewiesen, daß der Aufbau der Wischanlage gemäß Figur 3 dem Aufbau der Wischanlage gemäß Figur 1 entspricht. Da jedoch die den Pendelumkehrlagen 16 beziehungsweise 16' des Wischblatts benachbarten Scheiben-Randbereiche 112 stärker zur Senkrechten 216 geneigt sind als dies bei der Anordnung gemäß Figur 1 der Fall ist, ist die wirksame Länge des Distanzarms 44 entsprechend vergrößert worden. Im Vergleich der Windschutzscheiben gemäß Figur 1 und Figur 3 ist klar ersichtlich, daß bei der Windschutzscheibe gemäß Figur 3 der Winkel α - eingeschlossen vom oberen und seitlichen Scheibenrand 112 deutlich größer ist als der Winkelα gemäß Figur 1. Um das Wischblatt 16 in den Pendelumkehrlagen 16 und 16' in eine parallele Position zum Scheibenrand zu bringen und somit bis nahe an diesen heranzufahren, ist auch eine stärkere Schwenkbewegung des Wischblatts um das Gelenk 20 erforderlich. Dies wird erreicht, in dem die wirksame Länge des Distanzarms 144 gemäß Figur 3 gegenüber der wirksamen Länge des Distanzarms 44 gemäß Figur 1 vergrößert wird. Dadurch wird der Steuerarm 50 stärker in Richtung des Doppelpfeiles 51 (Figur 3) bewegt so daß auch das Wischblatt 16 zusammen mit seinem Hebel 52 stärker entgegen dem Uhrzeigersinn geschwenkt wird, als dies bei der Anlage nach Figur 1 der Fall ist. Diese Änderung der wirksamen Länge des Distanzarmes 144 gegenüber dem Distanzarm 44 gemäß Figur 1 ist beim visuellen Vergleich der beiden Ausführungsbeispiele nach den Figuren 1 und 3 nur schwer erkennbar. Doch ist dem Fachmann bei Betrachtung der Getriebeglieder 44 und 144 klar, daß beispielsweise eine Vergrößerung der wirksamen Länge des Distanzarmes 44 bzw. 144 zu einer Vergrößerung des Hubweges des Steuerarms 50 in Richtung des Doppelpfeiles 51 und damit zu einer Vergrößerung des Schwenkwinkels des Wischblatts 16 gegenüber dem Wischerarm 18 führt. Selbstverständlich kann diese Wirkung auch durch Verkleinerung der wirksamen Länge des Hebels 52 oder durch Vergrößerung der wirksamen Länge des Steuerarms 50 erreicht werden. Die wirksame Länge des Steuerarms 50 ergibt sich aus dem Abstand zwischen dem Gelenk 54 und dem Gelenk 48. Schließlich sei noch bemerkt, daß durch eine entsprechende Abstimmung der wirksamen Länge des Distanzarmes 44 eine bleibende Senkrechtstellung des Wischblatts zwischen seinen beiden Umkehrstellungen erreicht werden kann. Änderungen der wirksamen Längen des Hebels 52 und/oder des Distanzarmes 144 bzw. 44 sichern die schon erwähnte Symmetrie des Wischfeldes 64 bzw. 164 bzw. 264.

Es ist somit klar nachgewiesen, daß der das Pendellager 22, 34 aufweisende Endabschnitt 36 des Wischerarms 18 ein Getriebeglied eines ersten Viergelenkgetriebes 38 bildet, an dem in Längsrichtung des Wischerarms 18 mit Abstand voneinander zwei weitere, an karosseriefesten Lagerstellen 28, 30 pendelbar gelagerte Getriebeglieder 24 und 32 des Viergelenks angelenkt sind und daß das eine 32 der weiteren Getriebeglieder 24, 32 gleichzeitig ein Getriebeglied eines zweiten Viergelenkgetriebes 40 bildet, an dem der Steuerarm 50 angelenkt ist. Auf diese Weise wird eine betriebssichere Wischanlage erhalten, die kostengünstig herzustellen ist und ohne besonderen Aufwand den jeweiligen Gegebenheiten hinsichtlich der Scheibenform angepaßt werden kann.

Obwohl dies dem Fachmann geläufig ist sei noch bemerkt, daß die Getriebeglieder der beiden Viergelenkgetriebe 38 und 40 sowie der Steuerarm 50 sich in hintereinander liegenden Ebenen bewegen.

## Patentansprüche

1. Wischanlage für Scheiben von Kraftfahrzeugen, mit einem einzigen Wischerarm (18), der an seinem einen Ende über ein Pendellager (32, 34) pendelbar gelagert angetrieben und an dessen anderen, freien Ende ein an der zu wischenden Oberfläche der Scheibe (10) anlegbares, zwischen zwei Umkehrlagen quer zu seiner Längserstreckung hin- und her bewegbares Wischblatt (16) angelenkt ist, mit einem sich etwa parallel zum angetriebenen Wischerarm erstreckenden Steuerarm (50) dessen eines Ende pendelbar gelagert ist und dessen anderes Ende gelenkig mit dem Wischblatt (16, 52) verbunden ist, so daß er während des Wischbetriebs eine der Pendelbewegung des Wischerarms entsprechende Pendelbewegung ausführt, dadurch gekennzeichnet, daß der das Pendellager (32, 34) aufweisende Endabschnitt des Wischerarms (18) ein Getriebeglied (36) eines ersten Mehrgelenkgetriebes (38) bildet, an dem mit Abstand voneinander weitere, an ortsfesten Lagerstellen (28, 30) pendelbar gelagerte Getriebeglieder (24, 32) des Mehrgelenks angelenkt sind und daß eines (32) der weiteren Getriebeglieder (24 bzw. 32) gleichzeitig ein Getriebeglied eines zweiten Mehrgelenkgetriebes (40) bildet, an dem der Steuerarm (50) angelenkt ist.

2. Wischanlage nach Anspruch 1, dadurch gekennzeichnet, daß die Mehrgelenkgetriebe als erstes und zweites Viergelenkgetriebe (38, 40) ausgebildet sind.

3. Wischanlage nach Anspruch 1 oder 2, dadurch gekennzeichnet, daß die an dem Endabschnitt (36) des Wischerarms (18) angelenkten Getriebeglieder (24, 32) hinsichtlich ihrer wirksamen Längen differieren.

4. Wischanlage nach Anspruch 3, dadurch gekennzeichnet, daß das kürzere Getriebeglied (24) am Ende des Wischerarms (18) angelenkt ist und das längere Getriebeglied (32) mit Abstand von diesem Gelenk (22) näher am Wischblatt (16) mit dem Wischerarm (18) gelenkig verbunden ist.

5. Wischanlage nach Anspruch 2, dadurch gekennzeichnet, daß das längere Getriebeglied (32) des ersten Viergelenkgetriebes (38) gleichzeitig ein Getriebeglied des zweiten Viergelenkgetriebes (40) bildet, daß an dem freien Ende dieses Getriebeglieds ein Ende eines zum zweiten Viergelenkgetriebe (40) gehörenden Distanzarms (44) angelenkt ist, wobei die Gelenkachsen der Gelenke (34) zwischen dem längeren Getriebeglied (32) und dem Wischerarm (18) sowie dem längeren Getriebeglied (32) und dem Distanzarm (44) miteinander fluchten und daß das andere Ende des Distanzarms (44) gelenkig mit dem Steuerarm (50) verbunden ist.

6. Wischanlage nach Anspruch 5, dadurch gekennzeichnet, daß an der Gelenkstelle (48) zwischen dem Steuerarm (50) und dem Distanzarm (44) das freie Ende eines weiteren, zum zweiten Viergelenkgetriebe (40) gehörenden Getriebeglieds (42) angelenkt ist, dessen anderes Ende ortsfest gelagert ist.

7. Wischanlage nach Anspruch 6, dadurch gekennzeichnet, daß die wirksame Länge des weiteren Getriebeglieds (42) des zweiten Viergelenkgetriebes (40) gleich ist der wirksamen Länge des dem ersten Viergelenkgetriebe (38) und dem zweiten Viergelenkgetriebe (40) gemeinsam zugeordneten Getriebeglieds (32).

8. Wischanlage nach einem der Ansprüche 1 bis 7, dadurch gekennzeichnet, daß die ortsfesten Lagerungen der Getriebeglieder (24 bzw. 32) des ersten Mehrgelenkgetriebes (38) und die ortsfesten Lagerungen der Getriebeglieder (32 bzw. 42) des zweiten Mehrgelenkgetriebes (40) an einem gemeinsamen, ortsfesten, an der Karosserie befestigbaren Bauelement (26) angeordnet sind.

9. Wischanlage nach einem der Ansprüche 6 bis 8, dadurch gekennzeichnet, daß das andere, vom Distanzarm (44) abgewandte Ende des Steuerarms (50) gelenkig mit dem Wischblatt (16, 52) verbunden ist.

10. Wischvorrichtung nach Anspruch 9, dadurch gekennzeichnet, daß das Gelenk (54) zwischen dem Steuerarm (50) und dem Wischblatt (16) an dem freien Ende eines fest mit dem Wischblatt (16) verbundenen, quer zur Wischblatt-Längserstreckung ausgerichteten Hebels (52) angeordnet ist.

11. Wischanlage nach einem der Ansprüche 1 bis 10, dadurch gekennzeichnet, daß das Wischblatt (16, 52) mit dem freien Ende des Wischerarms (18) gelenkig verbunden ist und daß die beiden Achsen der Gelenke (20 bzw. 54 bzw. 48 bzw. 34 bzw. 22) zwischen Wischerarm (18) und Wischblatt (16, 52) beziehungsweise Steuerarm (50) und Wischblatt (16, 52) beziehungsweise Steuerarm (50), Getriebeglied (42) und Distanzarm (44) beziehungsweise Distanzarm (44), Getriebeglied (32) und Wischerarm (18) beziehungsweise Wischerarm (18) und dem kürzeren Getriebeglied (24) sowie die Achsen der ortstesten Lagerungen (28, 30, 46) im eingebauten Zustand auf der Scheibenoberfläche stehend und zueinander parallel angeordnet sind.

12. Wischanlage nach einem der Ansprüche 1 bis 11, dadurch gekennzeichnet, daß das zu dem ersten und zu dem zweiten Mehrgelenkgetriebe (38 bzw. 40) gehörenden gemeinsame Getriebeglied (32) pendelnd angetrieben ist.

13. Wischanlage nach einem der Ansprüche 1 bis 12, dadurch gekennzeichnet, daß zum Antreiben der Wischanlange ein Aggregat (56) dient, das eine pendelnd angetriebene Abtriebswelle (58) aufweist.
